# EUROPÄISCHE PATENTANMELDUNG

(11) **EP 0 888 835 A1**
(43) Veröffentlichungstag der Anmeldung: **07.01.1999**
(21) Anmeldenummer: 98108979.0
(22) Anmeldetag: 18.05.1998
(51) Int. Cl.: B21D 47/04, B62D 25/20, B21C 37/15, B21D 49/00, E04C 3/07

(54) **Verfahren zum Herstellen eines Metallformteils**

(30) Priorität: 04.07.1997 DE 19728582
(71) Anmelder: Volkswagen Aktiengesellschaft, 38436 Wolfsburg (DE)
(72) Erfinder: Morsch, Klaus-Dieter, 38124 Braunschweig (DE)

(57) **Zusammenfassung**

Die Erfindung betrifft ein Verfahren zum Herstellen eines Metallformteils, bei dem das Metallformteil (2) in mehreren aufeinanderfolgenden Umformschritten durch Biegen, Pressen und/oder Tiefziehen aus einem ebenen Zuschnitt (4) aus Metallblech hergestellt wird, wobei ein nach Durchführung eines Teils der Umformschritte erzeugtes Zwischenprodukt (12) eine Mehrzahl von im wesentlichen parallelen Biegelinien (10) und in einem zu den Biegelinien (10) senkrechten Querschnitt ein rinnenförmiges Profil oder Teilprofil aufweist. Um die Biege- oder Verwindungssteifigkeit des Zwischenprodukts (12) zu vergrößern, so daß es sich bei späteren Umformschritten weniger stark verziehen kann, wird das rinnenförmige Profil oder Teilprofil mit mindestens einem Versteifungsblech (18) versteift, das im wesentlichen senkrecht zu den Biegelinien (10) in das Profil oder Teilprofil eingesetzt und starr am Metallblech befestigt wird, bevor das Metallformteil (2) durch weitere am Metallblech vorgenommene Umformschritte fertiggestellt wird.

## Beschreibung

Die Erfindung betrifft ein Verfahren zum Herstellen eines Metallformteils, bei dem das Metallformteil in mehreren aufeinanderfolgenden Umformschritten durch Biegen, Pressen und/oder Tiefziehen aus einem ebenen Zuschnitt aus Metallblech hergestellt wird, wobei es nach Durchführung eines Teils der Umformschritte eine Mehrzahl von im wesentlichen parallelen Biegelinien und in einem zu den Biegelinien senkrechten Querschnitt ein rinnenförmiges Profil oder Teilprofil aufweist. Die Erfindung betrifft weiter ein Metallformteil, umfassend ein in mehreren aufeinanderfolgenden Umformschritten aus einem ebenen Zuschnitt durch Biegen, Pressen und/oder Tiefziehen geformtes Metallblech, das eine Mehrzahl von im wesentlichen parallelen Biegelinien und in einem zu den Biegelinien senkrechten Querschnitt ein rinnenförmiges Profil oder Teilprofil aufweist.

Im Kraftfahrzeugbau findet eine Vielzahl von langgestreckten Metallformteilen Verwendung, wie beispielsweise Mitteltunnel, Längsträgerhälften, Längsträger oder Querträger mit einem rinnenförmigen oder geschlossenen Profil oder Teilprofil, die aus einem ebenen Zuschnitt aus Metallblech hergestellt werden, der infolge einer zunehmend komplizierteren Gestalt der meisten Formteile gewöhnlich in mehreren aufeinanderfolgenden Schritten durch Biegen, Pressen und/oder Tiefziehen so umgeformt wird, daß das gebildete Metallformteil parallel zu seiner Längsachse eine Mehrzahl von parallelen oder im wesentlichen parallelen Biegelinien aufweist, welche gewöhnlich die Kanten des Profils oder Teilprofils bilden. Diese aus Montage-, Steifigkeits- oder anderen Gründen häufig komplizierter geformten Blechteile können sich insbesondere bei einer größeren Länge und/oder einer geringeren Blechdicke während der Herstellungsphase aufgrund von Toleranzen der Blechdicke oder der Materialeigenschaften oder infolge einer Abnutzung des Werkzeugs verziehen, wodurch die Maßgenauigkeit der fertiggestellten Teile verschlechtert wird. Dies hat jedoch zur Folge, daß beim Zusammenbau größere Toleranzen ausgeglichen werden müssen, wodurch insbesondere im Fall von erforderlichen Nacharbeiten der Arbeitsaufwand erheblich größer wird, und daß die Anzahl unbrauchbarer Teile ansteigt.

Um das Gewicht vom Blechstrukturteilen im Fahrzeugbau zu verringern und Material einzusparen, wird in der DE 43 07 563 A1 bereits vorgeschlagen, an steifigkeitsrelevanten Stellen oder im Bereich von Krafteinleitungspunkten auf ein verhältnismäßig dünn dimensioniertes Grundblech ein oder mehrere Verstärkungsbleche flächig aufzulegen und mindestens vorläufig zu befestigen, die Bleche anschließend gemeinsam zum Blechstrukturteil umzuformen und nach dem Umformen unlösbar miteinander zu verbinden, beispielsweise durch Druckfügen (Clinchen), Einpressen und Verprägen von Einstanzbolzen bzw. Einstanzmuttern, Schweißen oder Verkleben.

Weiter ist aus der DE 42 28 396 A1 ein Herstellungsverfahren für ein tiefgezogenes oder formgestanztes Doppelblech-Strukturteil bekannt, bei dem ein Grundblech und ein Versteifungsblech mit einem Lochmuster versehen und so übereinandergelegt werden, daß sich die Löcher nicht überdecken. Nach einem Verbinden der beiden zueinander parallelen Bleche durch Schweißen oder Clinchen werden diese gemeinsam tiefgezogen oder formgestanzt und anschließend durch die Löcher hindurch mit Hilfe von Spreizstempeln auseinandergedrückt, um die Versteifungswirkung zu verbessern. Da jedoch in beiden Fällen das Grundblech und die Verstärkungsbleche flächig gegeneinander anliegen, eignen sich derartig verstärkte Bleche nicht besonders gut, um mit geringem Materialeinsatz rinnenförmige oder rohrförmig geschlossene Profile gegen Querbiegung und/oder Verwindung während der Herstellungsphase zu versteifen.

Aus der DE-OS 24 13 343 der Anmelderin ist weiter ein Verfahren zum Befestigen eines U-Profils auf einem Steg aus mehreren parallelen Blechen bekannt, bei dem hydraulisch oder pneumatisch eine Zunge aus einem der Schenkel des U-Profils herausgestanzt und mit ihrem freien Ende unter Verformung des Stegmaterials in den Steg hineingedrückt wird. Um ein Ausweichen des Stegmaterials zu ermöglichen, ist der gegenüberliegende Schenkel an der Verformungsstelle ausgespart.

Ausgehend hiervon liegt der Erfindung die Aufgabe zugrunde, bei einem Verfahren und einem Metallformteil der eingangs genannten Art die Biege- oder Verwindungssteifigkeit eines nach Durchführung eines Teils der Umformschritte erzeugten Zwischenprodukts mit rinnenförmigem Profil oder Teilprofil zu vergrößern, so daß es sich bei späteren Umformschritten weniger stark verziehen kann.

Diese Aufgabe wird im Hinblick auf das Verfahren erfindungsgemäß dadurch gelöst, daß das rinnenförmige Profil oder Teilprofil mit mindestens einem Versteifungsblech versteift wird, das im wesentlichen senkrecht zu den Biegelinien in das Profil oder Teilprofil eingesetzt und starr am Metallblech befestigt wird, bevor das Metallformteil durch weitere am Metallblech vorgenommene Umformschritte fertiggestellt wird. Der Erfindung liegt der Gedanke zugrunde, die Steifigkeit des nach einem Teil der Umformschritte erzeugten Zwischenprodukts mit dem rinnenförmigen Profil oder Teilprofil durch Versteifungs- oder Schottbleche zu vergrößem, die quer durch das rinnenförmige Profil oder Teilprofil verlaufen und mindestens an einem Teil der Wände des Profils oder Teilprofils des Zwischenprodukts befestigt werden, bevor die restlichen Umformschritte zur Fertigstellung des Metallformteils vorgenommen werden. Längere Metallformteile, wie Längsträger oder Mitteltunnel werden bevorzugt durch mehrere Versteifungsbleche verstärkt, die zweckmäßig im wesentlichen im gleichen Abstand parallel zueinander angeordnet sind.

Um zu vermeiden, daß das Zwischenprodukt zum Anbringen des oder der Versteifungsbleche aus dem Umformwerkzeug, d.h. aus einer Presse oder Biegemaschine entnommen werden muß, erfolgt die Befestigung des oder der Versteifungsbleche vorzugsweise nicht durch Schweißen sondern bevorzugt durch Umformen des Metallblechs und/oder des Versteifungsblechs, insbesondere durch Druckfügen oder Clinchen, weil dieses Verfahren einen ähnlichen Bewegungsablauf wie beim Tiefziehen, Pressen oder Stanzen aufweist und sich daher gut in das Umformwerkzeug integrieren läßt. Alternativ ist jedoch auch eine Befestigung der Versteifungsbleche durch Kleben oder Nieten innerhalb des Umformwerkzeugs möglich.

Eine weitere vorteilhafte Ausgestaltung der Erfindung sieht vor, daß das Versteifungsblech an mindestens einem seiner Ränder umgebogen ist, so daß es mindestens einen zum benachbarten Metallblech parallelen Lappen aufweist, der flächig gegen das Metallblech anliegt, so daß er sich ohne weiteres mit Hilfe einer der genannten Fügetechniken starr mit dem Metallblech verbinden läßt.

Um in erfindungsgemäß versteiften Metallformteilen, wie beispielsweise einem Mitteltunnel eines Kraftfahrzeugs, eine Verlegung von Kabeln, Schläuchen oder dergleichen zu ermöglichen, sieht eine weitere bevorzugte Ausgestaltung der Erfindung vor, daß das oder die Versteifungsbleche mindestens eine Durchgangsöffnung oder eine randoffene Aussparung aufweisen, die sich vorzugsweise zu einer offenen Seite des rinnenförmigen Profils oder Teilprofils hin öffnet, um das Verlegen der Kabel, Schläuche oder dergleichen zu erleichtern. Zur Gewichtseinsparung können die Versteifungsbleche vor dem Anbringen mit weiteren Durchgangsöffnungen oder Perforationen versehen werden, ohne die Steifigkeit des Zwischenprodukts zu beeinträchtigen.

Im folgenden wird die Erfindung anhand einiger in der Zeichnung dargestellter Ausführungsbeispiele näher erläutert. Es zeigen:
- Figuren 1a - 1d: : Ansichten mehrerer aufeinanderfolgender Arbeitsschritte zur Herstellung eines Metallformteils in perspektivischer Darstellung;
- Fig. 2:: einen Schnitt durch das Zwischenprodukt aus Fig. 1c entlang der Linie 2-2 mit einem etwas abgewandelten Versteifungsblech;
- Figuren 3a und b:: eine perspektivische Ansicht eines weiteren abgewandelten Versteifungsblechs und einen vertikalen Schnitt durch einen Teil des eingesetzten Versteifungsblechs;
- Figuren 4a - 4d:: Ansichten mehrerer aufeinanderfolgender Schritte bei der Herstellung eines anderen Metallformteils von dessen Stirnseite aus gesehen.

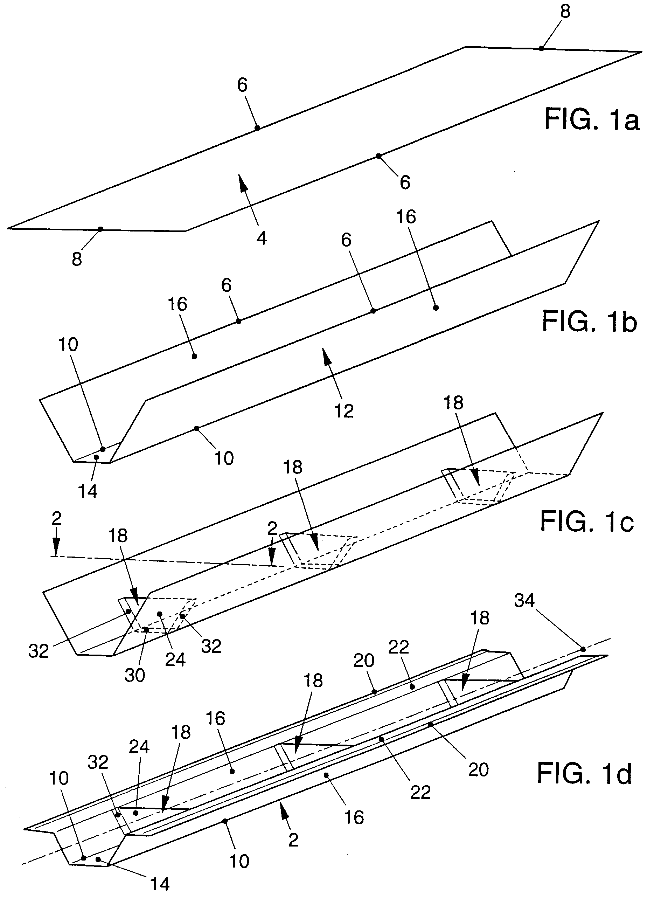

Der in den Figuren 1a bis 1d schematisch dargestellte Arbeitsablauf bei der Herstellung eines als Mitteltunnel für einen Personenkraftwagen vorgesehenen, in Fig. 1d in fertigem Zustand dargestellten Metallformteils 2 umfaßt im wesentlichen die folgenden Arbeitsschritte: ein in Fig. 1a dargestellter rechteckiger langgestreckter Zuschnitt 4 aus einem dünnen ebenen Stahlblech mit zwei Längsseitenrändern 6 und zwei schmaleren Stirnseitenrändern 8 wird in ein Tiefziehwerkzeug (nicht dargestellt) eingelegt und entlang von zwei, zu den Längsseitenrändern 6 parallelen Biegelinien 10 in die in Fig. 1b dargestellte Form tiefgezogen, so daß das gebildete Zwischenprodukt 12 einen rinnenförmigen Querschnitt mit einer Bodenwand 14 und zwei gleichhohen, unter einem Winkel von etwa 60 Grad entlang der Biegelinien 10 aus der Ebene der Bodenwand 14 nach oben abgebogenen Längsseitenwänden 16 aufweist.

Um zu verhindern, daß sich das langgestreckte Zwischenprodukt 12 bei nachfolgenden Arbeitsschritten und insbesondere bei weiteren Umformschritten infolge von Tolerazen der Blechdicke oder der Materialeigenschaften oder infolge einer Abnutzung des zum Umformen verwendeten Werkzeugs verzieht, werden ein oder mehrere Versteifungsbleche 18 (in Fig. 1c sind drei Bleche 18 dargestellt) in das rinnenförmige Profil des Zwischenprodukts 12 eingesetzt und entlang eines Teils ihres Umfangs starr mit diesem verbunden, bevor die äußersten Ränder 20 der Längsseitenwände 16 doppelt umgebogen und ein an die doppelt umgebogenen Ränder 20 angrenzender Streifen 22 der Längsseitenwände 16 nach außen abgebogen wird, wie in Fig. 1d dargestellt.

Die ebenfalls aus Stahlblech mit einer gleichgroßen oder ggf. etwas größeren Dicke hergestellten Versteifungs- oder Schottbleche 18 bestehen im wesentlichen aus einem trapezförmigen Mittelteil 24 mit einem dem rinnenförmigen Querschnitt des Zwischenprodukts 12 im wesentlichen entsprechenden äußeren Umriß und drei, am kürzeren unteren Rand sowie an den beiden schrägen Seitenrändern des Mittelteils 24 im rechten Winkel zur Ebene desselben abgebogenen streifenförmigen Lappen 30, 32, deren Länge im wesentlichen der Länge des unteren Randes bzw. der schrägen Seitenränder des Mittelteils 24 entspricht. Zur Vereinfachung der Herstellung stehen die Lappen 30, 32 zweckmäßig nach einer Breitseite zu über den Mittelteil 24 des Versteifungsblechs 18 über, jedoch ist es auch möglich, zum Beispiel den Lappen 30 am unteren Rand in entgegengesetzter Richtung zu den Lappen 32 an den schrägen Seitenrändem abzubiegen.

Die Versteifungsbleche 18 werden senkrecht zu den Biegelinien 10 in das rinnenförmige Profil des Zwischenprodukts 12 und damit senkrecht zu dessen Längsachse 34 eingesetzt, so daß die Lappen 30, 32 flächig gegen die Bodenwand 14 und die beiden Längsseitenwände 16 des Zwischenprodukts 12 anliegen und ein Umkippen der Versteifungsbleche 18 verhindern. Nach dem Einsetzen der Versteifungsbleche 18 werden die beiden Formhälften des Tiefziehwerkzeugs, von denen die obere drei Querschlitze für den Eintritt der Versteifungsbleche 18 aufweist, erneut zusammenbewegt, um die Lappen 30, 32 der Versteifungsbleche 18 gegen die benachbarten Wände 14, 16 des Zwischenprodukts 12 anzupressen, bevor sie vorzugsweise durch Umformung von Teilen der gegeneinander anliegenden Bleche innerhalb des Tiefziehwerkzeugs starr am Zwischenprodukt 12 befestigt werden.

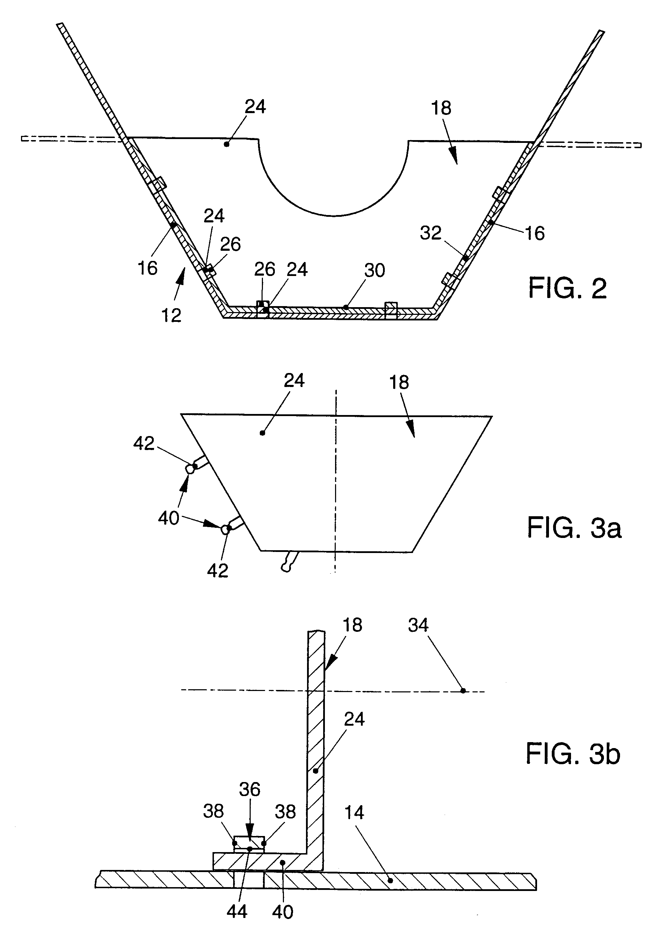

Die Befestigung der Versteifungsbleche 18 durch Umformung innerhalb des Tiefziehwerkzeugs erfolgt vorzugsweise durch Druckfügen (Clinchen). Dazu ist die untere Formhälfte des Tiefziehwerkzeugs im Bereich jedes Lappens 30, 32 mit zwei beweglichen Stempeln versehen, die nach dem Absenken des oberen Formteils in das rinnenförmige Profil hydraulisch betätigt werden und senkrecht zur Ebene der Lappen 30, 32 und der Wände 14, 16 von außen her in diese eindringen, um Teile 24, 26 der beiden Bleche nach innen in eine entsprechend angeordnete und etwas größere Abmessungen als der Stempel aufweisende Aussparung in der oberen Formhälfte zu drücken, wobei die von den Stempeln nach innen gedrückten Teile 24, 26 durch eine geeignete Gestaltung der vorderen Enden der Stempel teilweise vom umgebenden Blech abgeschert werden und teilweise mit diesem verbunden bleiben, wie in Fig. 2 dargestellt und beispielsweise in den US-Patenten 5,305,517 oder 5,408,735 näher beschrieben, deren Offenbarung im Hinblick auf die Befestigung der Versteifungsbleche durch Druckfügen (Clinchen) als Teil der Offenbarung dieser Anmeldung aufgenommen werden soll.

Die Verbindung zwischen den Versteifungsblechen 18 und dem rinnenförmigen Zwischenprodukt 12 kann auch dadurch hergestellt werden, daß am Versteifungsblech 18 an Stelle der breiten Lappen 30, 32 schmalere überstehende Zungen 40 mit einer Einschnürung 42 im rechten Winkel zum Mittelteil 24 abgebogen werden, wie in Fig. 3a dargestellt, und beim vorangehenden Tiefziehschritt zum Beispiel in der Mitte der Bodenwand 14 und der Seitenwände 16 quer zur Längsachse 34 streifenförmige Stege 36 entlang ihrer Längsränder 38 vom umgebenden Metallblech abgeschert und nach innen ins Profil hineingedrückt werden, so daß zwischen der Innenseite der Wände 14, 16 und den nach außen weisenden Flächen der Stege 36 Schlitze 44 gebildet werden, in welche sich die Zungen 40 einführen lassen, wie in Fig. 3b dargestellt, um die Versteifungsbleche 18 an den vorgegebenen Stellen des Zwischenprodukts vorläufig zu fixieren und ihr Umkippen zu verhindern. Nach dem Einsetzen der Versteifungsbleche 18 kann das obere Formteil erneut in das Profil hinein abgesenkt werden, um die Stege 36 auf den Zungen 40 festzuklemmen, wobei diese Klemmverbindungen ausreichend sind, um dem Zwischenprodukt 12 für die nachfolgenden Umformschritte eine größere Biege- und Verwindungssteifigkeit zu verleihen. Eine Befestigung der Versteifungsbleche an den in die Schlitze 44 geschobenen Zungen 40 durch Druckfügen ist ebenfalls möglich, um die spätere Steifigkeit des Bauteils weiter zu vergrößern.
Alternativ kann die Befestigung der Versteifungsbleche auch durch Clinch-Verbinder erfolgen, wie sie beispielsweise in der CA 2127488 oder in der WO 9527147 beschrieben sind, sowie außerhalb des Tiefziehwerkzeugs durch Schweißen, Kleben oder Nieten, wobei jedoch die beiden zuerst beschriebenen Fügetechniken unter Umformung von gegeneinander anliegenden Blechteilen des Zwischenprodukts 12 und des Versteifungsblechs 18 bevorzugt wird.

Im Zuge des Befestigens der Versteifungsbleche 18 am rinnenförmigen Profil 12 durch Druckfügen können gleichzeitig Durchtrittsöffnungen in der Bodenwand 14 oder in den Längsseitenwänden 16 des Profils 12 ausgestanzt werden, durch die beispielsweise Kabel oder Schläuche in den späteren Mitteltunnel eintreten oder aus diesem herausgeführt werden können. Um ein Verlegen von Kabeln oder Schläuchen entlang des Mitteltunnels zu ermöglichen, weist das in Fig. 2 dargestellte Versteifungsblech 18 eine halbkreisförmige randoffene Aussparung 46 auf, die nach der Fertigstellung einen Hindurchtritt von Kabelbündeln oder Schläuchen durch das Versteifungsblech 18 ermöglicht.

Nach dem Befestigen der Versteifungsbleche 18 wird das versteifte Zwischenprodukt 12 weiteren Umformschritten unterzogen, bei denen, wie erwähnt, die Ränder 20 der Längsseitenwände 16 doppelt umgebogen und der an die doppelt umgebogenen Ränder 20 angrenzende Streifen 22 der Längsseitenwände 16 nach außen abgebogen wird, wie in Fig. 1d dargestellt. Weiter können an vorgegebenen Stellen Sicken eingepreßt oder Aussparungen ausgestanzt werden, zum Beispiel um das Positionieren des fertigen Mitteltunnels bei der späteren Montage zu erleichtern.

Durch die Anbringung der Versteifungsbleche 18 vor den restlichen Umformschritten oder sonstigen Arbeitsschritten kann ein Verziehen des Zwischenprodukts 12 verhindert und damit die Maßgenauigkeit des fertiggestellten Metallformteils verbessert werden.

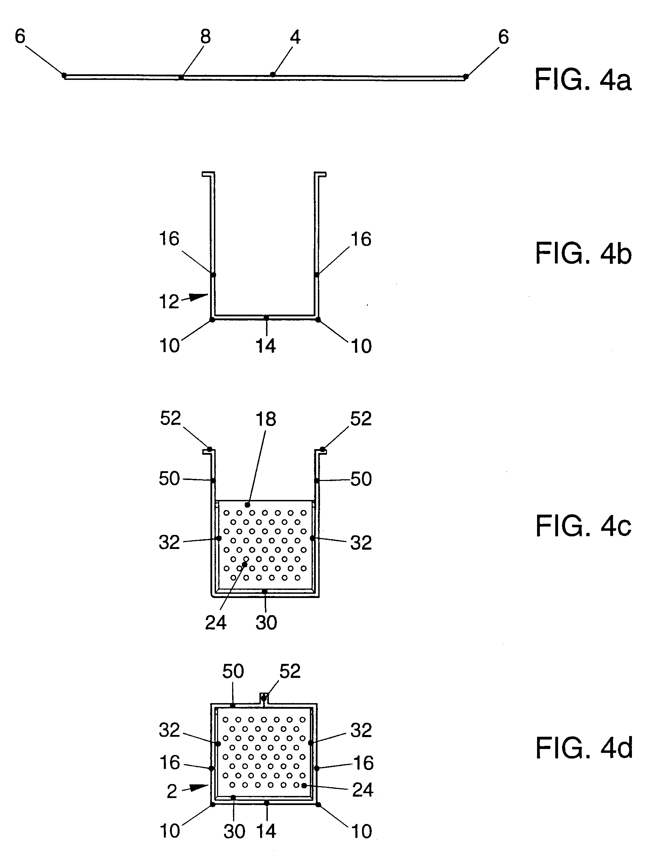

Bei dem Ausführungsbeispiel in den Figuren 4a bis 4d ist das fertige Metallformteil 2 (in Fig. 4d in Stirnseitenansicht dargestellt) im Unterschied zu dem vorangehend beschriebenen Ausführungsbeispiel ein Längs- oder Querträger mit einem geschlossenen quadratischen Querschnitt, der gleichfalls mit Versteifungsbleche 18 versehen ist, die einen entprechend quadratischen Mittelteil 24 aufweisen, senkrecht zu den von den Biegelinien 10 gebildeten parallelen Kanten in das im Querschnitt U-förmige Profil des Zwischenprodukts 12 eingesetzt und zum Beispiel durch Druckfügen, wie oben beschrieben, starr mit diesem verbunden werden, bevor nach oben über die Versteifungsbleche 18 überstehende Randstreifen 50 über den Versteifungsblechen 18 zusammengebogen und an ihren Rändern 52 miteinander verbunden werden.

Im Unterschied zu dem zuvor beschriebenen Ausführungsbeispiel sind die quadratischen Versteifungsbleche 18 hier perforiert, wie in Fig. 4c und d dargestellt, wodurch ohne Einbußen im Hinblick auf die Biege- oder Verwindungssteifigkeit eine Reduzierung des Gewichts des Trägers möglich ist.

## Patentansprüche

1. Verfahren zum Herstellen eines Metallformteils, bei dem das Metallformteil in mehreren aufeinanderfolgenden Umformschritten durch Biegen, Pressen und/oder Tiefziehen aus einem ebenen Zuschnitt aus Metallblech hergestellt wird, wobei es nach Durchführung eines Teils der Umformschritte eine Mehrzahl von im wesentlichen parallelen Biegelinien und in einem zu den Biegelinien senkrechten Querschnitt ein rinnenförmiges Profil oder Teilprofil aufweist, dadurch gekennzeichnet, daß das rinnenförmige Profil oder Teilprofil mit mindestens einem Versteifungsblech (18) versteift wird, das im wesentlichen senkrecht zu den Biegelinien (10) in das Profil oder Teilprofil eingesetzt und starr am Metallblech befestigt wird, bevor das Metallformteil (2) durch weitere am Metallblech vorgenommene Umformschritte fertiggestellt wird.

2. Verfahren nach Anspruch 1, dadurch gekennzeichnet, daß das Versteifungsblech (18) durch Umformen des Metallblechs und/oder des Versteifungsblechs (18) am Metallblech befestigt wird.

3. Verfahren nach Anspruch 2, dadurch gekennzeichnet, daß das Versteifungsblech (18) durch Druckfügen (Clinchen) am Metallblech befestigt wird.

4. Verfahren nach Anspruch 1, dadurch gekennzeichnet, daß das Versteifungsblech (18) durch Kleben am Metallblech befestigt wird.

5. Verfahren nach Anspruch 1, dadurch gekennzeichnet, daß das Versteifungsblech (18) durch Nieten am Metallblech befestigt wird.

6. Verfahren nach einem der Ansprüche 1 bis 5, dadurch gekennzeichnet, daß an mindestens einem der zum Metallblech benachbarten Ränder des Versteifungsblechs (18) ein Lappen (30, 32) umgebogen wird, der nach dem Einsetzen des Versteifungsblechs (18) flächig gegen das Metallblech anliegend starr mit diesem verbunden wird.

7. Verfahren nach Anspruch 6, dadurch gekennzeichnet, daß das Versteifungsblech (18) im Bereich des Lappens (30, 32) durch Druckfügen am Metallblech befestigt wird.

8. Verfahren nach einem der Ansprüche 1 bis 5, dadurch gekennzeichnet, daß das Versteifungsblech (18) an mindestens einem seiner zum Metallblech benachbarten Ränder mit einer abgebogenen Zunge (40) versehen wird, die beim Einsetzen des Versteifungsblechs (18) in einen bei einem der vorangehenden Umformschritte im Metallblech gebildeten Schlitz (44) eingeführt und anschließend im Schlitz (44) festgeklemmt wird.

9. Verfahren nach einem der Ansprüche 1 bis 8, dadurch gekennzeichnet, daß anschließend ein Teil (50) des Metallblechs über das eingesetzte Versteifungsblech (18) gebogen wird.

10. Verfahren nach Anspruch 9, dadurch gekennzeichnet, daß gegeneinander anliegende, zu den Biegelinien (10) im wesentlichen parallele Ränder (52) des Metallblechs starr miteinander verbunden werden.

11. Verfahren nach einem der Ansprüche 1 bis 10, dadurch gekennzeichnet, daß das Versteifungsblech (18) in einer zur Durchführung mindestens eines Teils der Umformschritte verwendeten Umformvorrichtung in das rinnenförmige Profil oder Teilprofil eingesetzt und am Metallblech befestigt wird.

12. Metallformteil, umfassend ein in mehreren aufeinanderfolgenden Umformschritten durch Biegen, Pressen und/oder Tiefziehen aus einem ebenen Zuschnitt geformtes Metallblech, das eine Mehrzahl von im wesentlichen parallelen Biegelinien und in einem zu den Biegelinien senkrechten Querschnitt ein rinnenförmiges Profil oder Teilprofil aufweist, gekennzeichnet durch mindestens ein Versteifungsblech (18), das innerhalb des rinnenförmigen Profils oder Teilprofils im wesentlichen senkrecht zu den Biegelinien (10) eingesetzt und starr am Metallblech befestigt ist.

13. Metallformteil nach Anspruch 12, dadurch gekennzeichnet, daß das Versteifungsblech (18) am Metallblech festgeclincht ist.

14. Metallformteil nach Anspruch 12, dadurch gekennzeichnet, daß das Versteifungsblech (18) durch einen Kleber am Metallblech befestigt ist.

15. Metallformteil nach Anspruch 12, dadurch gekennzeichnet, daß das Versteifungsblech (18) durch Nieten am Metallblech befestigt ist.

16. Metallformteil nach einem der Ansprüche 12 bis 16, dadurch gekennzeichnet, daß das Versteifungsblech (18) an mindestens einem seiner zum Metallblech benachbarten Ränder einen im Winkel abgebogenen Lappen (30, 32) aufweist, der flächig gegen das Metallblech anliegt und starr an diesem befestigt ist.

17. Metallformteil nach Anspruch 16, dadurch gekennzeichnet, daß der Lappen (30, 32) durch Druckfügen am Metallblech befestigt ist.

18. Metallformteil nach einem der Ansprüche 12 bis 16, dadurch gekennzeichnet, daß das Versteifungsblech (18) an mindestens einem seiner zum Metallblech benachbarten Ränder eine im Winkel abgebogene Zunge (40) aufweist, die in einen Schlitz (44) des Metallblechs eingreift und in diesem festgeklemmt ist.

19. Metallformteil nach einem der Ansprüche 12 bis 19, dadurch gekennzeichnet, daß das rinnenförmige Profil oder Teilprofil durch Umbiegen eines Teils (50) des Metallblechs über das Versteifungsblech (18) zu einem rohrförmigen Profil geschlossen ist.

20. Metallformteil nach einem der Ansprüche 12 bis 19, dadurch gekennzeichnet, daß das Versteifungsblech (18) eine oder mehrere Durchgangsöffnungen (46) begrenzt.

21. Metallformteil nach einem der Ansprüche 12 bis 20, dadurch gekennzeichnet, daß das Versteifungsblech (18) perforiert ist.
